# EUROPEAN PATENT SPECIFICATION

(11) **EP 3 160 240 B1**
(45) Date of publication and mention of the grant of the patent: **13.12.2023**
(21) Application number: 15734787.3
(22) Date of filing: 25.06.2015
(51) Int. Cl.: A22C 13/00, C08J 5/00, B29C 48/00, B29C 48/34, B29C 48/88, B29C 48/154, B29C 48/09, C08J 5/18

(54) **POLY ALPHA-1,3-GLUCAN FOOD CASINGS AND METHOD FOR THEIR PRODUCTION**
NAHRUNGSMITTELHÜLLEN AUS POLY ALFA 1,3 GLUCANE UND VERFAHREN ZU IHRER HERSTELLUNG
BOYAUX ALIMENTAIRES DE POLY ALPHA 1,3 GLUCANE ET PROCÉDÉ POUR LEUR FABRICATION

(30) Priority: 26.06.2014 US 201462017494 P; 26.06.2014 US 201462017502 P
(43) Date of publication of application: 03.05.2017
(73) Proprietor: Nutrition & Biosciences USA 4, Inc., Rochester NY 14623 (US)
(72) Inventor: MASSOUDA, Debora Flanagan, Wilmington, Delaware 19810 (US); MISHRA, Vindhya, Wilmington, Delaware 19806 (US); GEORGE, Matthew W., Middletown, Delaware 19709 (US)
(74) Representative: Dehns
(86) International application number: PCT/US2015/037656
(87) International publication number: WO 2015/200612

(56) References cited:
- WO-A1-2013/036968
- WO-A1-2015/103531
- WO-A1-2015/109064
- WO-A1-2015/123327
- WO-A2-2013/036918
- WO-A2-2014/052386
- US-A- 4 590 107
- US-A- 5 795 523
- US-B1- 7 000 000
- CHEGOLYA A S ET AL: "PRODUCTION OF REGENERATED CELLULOSE FIBERS WITHOUT CARBON DISULFIDE", TEXTILE RESEARCH JOURNAL, SAGE PUBLICATIONS, LONDON, GB, vol. 59, no. 9, 1 September 1989 (1989-09-01), pages 501-506, XP000051474, ISSN: 0040-5175
- Kim Dong Bok ET AL: "Physical agglomeration behavior in preparation of cellulose-N-methyl morpholineN-oxide hydrate solutions by simple mixing", Journal of Applied Polymer Science, vol. 93, no. 4, 1 January 2004 (2004-01-01), pages 1687-1697, XP055973562, US ISSN: 0021-8995, DOI: 10.1002/app.20607

## Description

### FIELD OF THE INVENTION

This invention relates to poly alpha-1,3-glucan food casings and methods of their preparation.

### BACKGROUND

Glucose-based polysaccharides and their derivatives can be of potential industrial application.

Cellulose is a typical example of such a polysaccharide and is comprisedof beta-1,4-D-glycosidic linkages of hexopyranose units. Cellulose is used for several commercial applications such as in manufacture of fibers, films (cellophane), sponges and food casings.

Casings are soft cylindrical or tubular containers used to contain food such as a sausage mix. Casings can be of natural origins or artificial. Natural casings are obtained from animal intestines. Manufactured artificial casings are made of cellulose, collagen or synthetic materials.

Artificial casings, such as collagen, cellulose, plastic and extruded casings were developed at the beginning of the 20^{th} century when, in some countries, the supply of natural casings could no longer cope with the demand for such natural casings from the growing meat industry. Following the development of highly automated sausage filling equipment, artificial casings proved to be better suited to those systems, mainly due to their uniformity.

Also from a hygienic point of view, there were certain advantages to artificial casings as the microbial contamination is negligible, refrigeration is not needed and there are not spoilage problems during transport and storage.

Artificial casings can be subdivided into two categories based on their structure and composition: 1) casings made of natural materials fall into two groups: a) casings made from organic plant material, namely, cellulose and b) casings made from animal by-products, namely, collagen; 2) casings made of synthetic substances deriving from thermoplastic materials including plastics or polymers such as polyamide, polypropylene or polyethylene.

Cellulose for industrial applications is derived from wood pulp. Specifically, cellulose, usually from cotton linters or wood pulp, is processed to make viscose, which is then extruded into clear, tough casings for making wieners and franks. Cellulosic viscose solutions are combined with wood pulp to make large diameter fibrous casings for bologna, cotto salami, smoke ham and other products sliced for sandwiches. This type is also permeable to smoke and water vapor. The can be flat or shirred, depending on application, and can be pretreated with smoke, caramel, color or other surface treatments.

Solutioning of cellulose is a difficult procedure. For production of objects from regenerated cellulose, the most commonly used process for dissolution of cellulose is the 'viscose process' where the cellulose is converted to cellulose xanthate made by treating a cellulose compound with sodium hydroxide and carbon disulfide (see, for example, U.S. Patent No. 4,590,107 and 5,795,523). The use of this process involves toxic chemicals and significant environmental costs. Industry is seeking an alternative to the viscose process because of the difficulties in handling carbon disulfide.

In addition to the toxicity of carbon disulfide, tube-making processes have the specific problem of removing the carbon disulfide gas that evolves during coagulation and collects in the middle of the tube. While a viscose flat-film process can run continuosly even while carbon disulfide is removed, a viscose tube process must be intermittently interupted to puncture the tube for removal of carbon disulfide the gas that collects inside the tube.

Amongst polysaccharide polymers, glucan polymers, with alpha-1,3-glycoside linkages, have been shown to possess significant advantages. U.S. Patent No. 7,000,000 disclosed preparation of a polysaccharide fiber comprising a polymer with hexose units, wherein at least 50% of the hexose units within the polymer were linked via alpha-1 ,3-glycoside linkages, and a number average degree of polymerization of at least 100. A glucosyltransferase enzyme from Streptococcus salivarius (gtfJ) was used to produce the polymer. The polymer formed a solution when it was dissolved in a solvent or in a mixture comprising a solvent. From this solution continuous, strong, cotton-like fibers, highly suitable for use in textiles, were spun and used.

As is discussed herein, it has been found that food casings composed of a polysaccharide glucan polymer can be made without toxic chemicals such as carbon disulfide.

### SUMMARY

The invention concerns a process for making a polysaccharide food casing comprising: (a) dissolving polysaccharide in a solvent composition to provide a solution of polysaccharide; (b) extruding the solution of polysaccharide into a coagulation bath to make a tube-shaped wet gel; (c) washing the tube-shaped wet gel with water; (d) optionally, plasticizing the tube-shaped wet gel with a plasticizer additive; and (e) removing the water from the tube-shaped wet gel to form a polysaccharide food casing, characterized in that the polysaccharide is poly alpha-1 ,3-glucan and the process does not use carbon disulfide.

In a further embodiment, the solvent composition is an aqueous base.

In a further embodiment, the aqueous base is selected from the group consisting of aqueous potassium hydroxide, aqueous sodium hydroxide and aqueous tetraethyl ammonium hydroxide.

In a further embodiment, the solvent composition further comprises a solubility additive, a plasticizer additive or a mixture thereof.

In a further embodiment, the coagulation bath comprises an aqueous acid or methanol.

In a further embodiment, the aqueous acid comprises aqueous sulfuric acid.

In a further embodiment, the coagulation bath further comprises sodium sulfate, boric acid or a mixture thereof.

In an further embodiment, the solution of poly alpha-1 ,3-glucan in (b) of the first embodiment is coextruded over an extruded food product into a coagulation bath to make a tube-shaped wet gel covering an extruded food product.

In a further embodiment, the disclosure concerns a polysaccharide food casing made according to a the process comprising: (1) (a) dissolving polysaccharide in a solvent composition to provide a solution of polysaccharide; (b) extruding the solution of polysaccharide into a coagulation bath to make a tube-shaped wet gel; (c) washing the tube-shaped wet gel with water; (d) optionally, plasticizing the tube-shaped wet gel with a plasticizer additive; and (e) removing the water from the tube-shaped wet gel to form a polysaccharide food casing and (2) optionally the solution of polysaccharide in (1) (b) is coextruded over an extruded food product into a coagulation bath to make a tube-shaped wet gel covering an extruded food product, characterized in that the polysaccharide is poly alpha-1,3-glucan and the process does not use carbon disulfide.

### DETAILED DESCRIPTION

As used herein, the term "invention" or "disclosed invention" is not meant to be limiting, but applies generally to any of the inventions defined in the claims or described herein. These terms are used interchangeably herein. Unless otherwise disclosed, the terms "a" and "an" as used herein are intended to encompass one or more (i.e., at least one) of a referenced feature.

The term "food casing" used herein refers to a flexible, thin, continuous material in the shape of a tube or cylinder, with an inside and an outside surface.

The term "film" used herein refers to a thin, visually continuous material.

The terms "poly alpha-1,3-glucan", "alpha-1,3-glucan polymer", "glucan polymer" and "glucan" are used interchangeably herein. Poly alpha-1,3-glucan is a polymer where the structure of poly alpha-1 ,3-glucan can be illustrated as follows (where n is 8 or more):

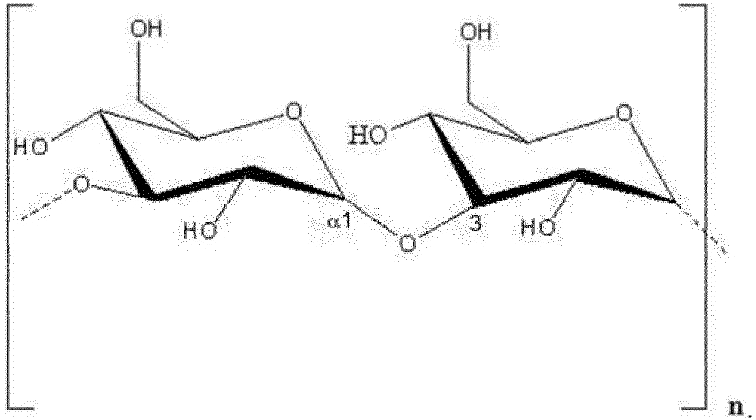

Poly alpha-1 ,3-glucan, useful for certain embodiments of the disclosed invention, can be prepared using chemical methods.

Alternatively, it can be prepared by extracting it from various organisms, such as fungi, that produce poly alpha-1 ,3-glucan. Poly alpha-1 ,3-glucan useful for certain embodiments of the disclosed invention can also be enzymatically produced from renewable resources, such as sucrose, using one or more glucosyl- transferase (e.g., gtfJ) enzyme catalysts found in microorganisms as described in the co-pending, commonly owned U.S. Patent Application Publication No. 2013/0244288.

For the preparation of the food casing, a solution of poly alpha-1,3-glucan is prepared. The solvent compositions include but are not limited to aqueous NaOH, aqueous KOH and aqueous tetraethyl ammonium hydroxide. Poly alpha-1,3-glucan is mixed into the solvent composition by application of shear. The concentration of the solution poly alpha-1 ,3-glucan typically range from about 10 wt% to about 23 wt%. Urea (CAS Registry Number: 57-13-6) or glycerol (CAS Registry Number: 56-81-5) may be added where the amount of urea can be up to the weight of the polymer in the solution, and the amount of glycerol can be varied.

A method for producing food casings from a polymer solution involves extruding a polymer solution into a coagulation bath (with or without an air gap) followed by removal of the solvent composition. In order to prepare food casings in this manner, a key requirement is when the polymer solution is coagulated in the coagulation bath, the tubular wet gel so formed has enough wet gel strength to survive tensioning from the formation process. It was discovered that high concentrations of poly alpha-1,3-glucan solutions were needed to give adequate strength wet gels. It was further discovered that these high concentration poly alpha-1,3-glucan solutions could be made with high concentration basic solutions or by specific choice of coagulation baths.

A process according to the present invention for making a poly alpha-1,3-glucan food casings compries: (a) dissolving poly alpha-1,3-glucan in a solvent composition to provide a solution of poly alpha-1,3-glucan; (b) extruding the solution of poly alpha-1,3-glucan into a coagulation bath to make a tube-shaped wet gel; (c) washing the tube-shaped wet gel with water; (d) optionally, plasticizing the tube-shaped wet gel with a plasticizer additive; and (e) removing the water from the tube-shaped wet gel to form a poly alpha-1,3-glucan food casing, wherein the process does not use carbon disulfide.

The poly alpha-1,3-glucan can have a DPw from at least about 400. The solvent composition is preferably an aqueous base. The aqueous base can be selected from the group consisting of aqueous potassium hydroxide, aqueous sodium hydroxide and aqueous tetraethyl ammonium hydroxide. The aqueous base is preferably aqueous potassium hydroxide. For a poly alpha-1,3-glucan with DPw of 850, the poly alpha-1,3-glucan concentration is preferably at least about 15 wt% and the aqueous potassium hydroxide is at least about 8 wt%. For a poly alpha-1,3-glucan with DPw of 650, the poly alpha-1,3-glucan concentration is preferably at least about 17 wt% and the aqueous potassium hydroxide is at least about 8 wt%. For a poly alpha-1,3-glucan with DPw of 550, the poly alpha-1,3-glucan concentration is preferably at least about 22 wt% and the aqueous potassium hydroxide is at least about 11 wt%. The solvent composition can further comprise a solubility additive such as urea, a plasticizer additive such as glycerol or a mixture thereof.

The coagulation bath comprises an aqueous acid or methanol or an aqueous base followed by aqueous acid. The aqueous acid is preferably sulfuric acid or acetic acid. The coagulation bath can further comprise a salt such as sodium sulfate, potassium sulfate, ammonium sulfate and sodium chloride.

The tube-shaped wet gel is washed with water until the bath has an approximately neutral pH.

The tube-shaped wet gel has a breaking stress of at least about 1.5 MPa, preferably about 2.0 MPa and most preferably about 2.5 MPa.

Water can be removed from the washed tube-shaped wet gel through evaporation to provide the poly alpha-1,3-glucan food casing.

The food casing has a breaking stress from about 10 to about 100 MPa.

It was found that dopes containing higher concentrations of glucan can be made in KOH/water. For example, solutions of up to 23% of glucan (550 DPw) were made. Then the wet gels formed by coagulating films of these solutions were found to have wet gel breaking stress, comparable to that of cellulose wet gels. With the correct balance of Mw and concentration, glucan flat wet gel strengths of at least 1.5 MPa can be made.

Coextruded sausage casings are formed by extruding a polymer solution through a die together with an extruded meat (or other food) emulsion. This coextruded product is then typically passed through one or more coagulation baths and possibly through a dryer. This same process equipment is expected to be used for glucan solutions. Glucan in caustic/water provides satisfactory coatings. Coagulation bath compositions are chosen to dehydrate and neutralize the glucan coating, leaving a wet gel covering the surface of the extruded food. Coagulation baths include alcohols, organic acids such as acetic acid, inorganic acids such as sulfuric acid or HCl, salts such as sodium sulfate and sodium chloride.

A method for coextruding food casings from a polymer solution involves extruding a polymer solution through an annular coextrusion die to coat the exterior of an extruded food product, such as a sausage, into a coagulation bath (with or without an air gap) followed by removal of the solvent composition. In order to prepare extruded food products in this manner, a key requirement is when the polymer solution is coagulated in the coagulation bath, the tubular wet gel so formed has enough wet gel strength to survive twisting and tensioning in the remaining process steps. It was discovered that high concentrations of poly alpha-1,3-glucan solutions were needed to give adequate strength wet gels. It was further discovered that these high concentration poly alpha-1,3-glucan solutions could be made with high concentration basic solutions.

A process according to the present invention for making an extruded food product covered with a poly alpha-1,3-glucan food casing comprising: (a) dissolving poly alpha-1,3-glucan in a solvent composition to provide a solution of poly alpha-1,3-glucan; (b) coextruding the solution of poly alpha-1,3-glucan onto the extrerior of an extruded food product and into a coagulation bath to make an extruded food product covered with a poly alpha-1,3-glucan wet gel; (c) washing the poly alpha-1,3-glucan wet-gel-covered extruded food product with water; (d) optionally, plasticizing the poly alpha-1,3-glucan wet gel with a plasticizer additive; and (e) removing the water from the wet-gel-coated extruded food product to form a poly alpha-1,3-glucan food casing covering the extruded food product, wherein the process does not use carbon disulfide.

The poly alpha-1,3-glucan can have a DPw from at least about 400. The solvent composition is preferably an aqueous base. The aqueous base can be selected from the group consisting of aqueous potassium hydroxide, and aqueous sodium hydroxide. The aqueous base is preferably aqueous potassium hydroxide. For a poly alpha-1,3-glucan with DPw of 850, the poly alpha-1,3-glucan concentration is preferably at least about 15 wt% and the aqueous potassium hydroxide is at least about 8 wt%. For a poly alpha-1,3-glucan with DPw of 650, the poly alpha-1,3-glucan concentration is preferably at least about 17 wt% and the aqueous potassium hydroxide is at least about 8 wt%. For a poly alpha-1,3-glucan with DPw of 550, the poly alpha-1,3-glucan concentration is preferably at least about 22 wt% and the aqueous potassium hydroxide is at least about 11 wt%. The solvent composition can further comprise a solubility additive such as urea, a plasticizer additive such as glycerol or a mixture thereof.

For the coextruded layer comprising glucan dissolved in aqueous caustic, the coagulation bath comprises an aqueous acid. The aqueous acid is preferably sulfuric acid or acetic acid. The coagulation bath can further comprise sodium sulfate.

The coextruded food product is washed with water until the bath has an approximately neutral pH.

The wet gel covering the interior extruded food product has a breaking stress of at least about 1.5 MPa, preferably about 2.0 MPa and most preferably about 2.5 MPa.

Water can be removed from the washed glucan wet-gel-covered extruded food product through evaporation to provide an extruded food product covered with a poly alpha-1,3-glucan food casing.

The casing covering the extruded food has a breaking stress from about 10 to about 100 MPa.

Food casings of the present disclosure can be used to encase any type of processed meat and sausage type applications. Thus, these casings can have a small diameter or a large diameter. Examples of a variety of processed meats, include but are not limited to wieners, franks, hot dogs, sausages, bologna, cotto salami, smoke ham and other products sliced for sandwiches.

The present disclosure is directed toward a process for making a poly alpha-1,3-glucan food casing comprising: (a) dissolving poly alpha-1,3-glucan in a solvent composition to provide a solution of poly alpha-1,3-glucan; (b) extruding the solution of poly alpha-1,3-glucan into a coagulation bath to make a tube-shaped wet gel; (c) washing the tube-shaped wet gel with water; (d) optionally, plasticizing the tube-shaped wet gel with a plasticizer additive; and (e) removing the water from the tube-shaped wet gel to form a poly alpha-1,3-glucan food casing, wherein the process does not use carbon disulfide. The solvent composition can be an aqueous base. The aqueous base can be selected from the group consisting of aqueous potassium hydroxide, aqueous sodium hydroxide and aqueous tetraethyl ammonium hydroxide. The solvent composition can further comprise a solubility additive, a plasticizer additive or a mixture thereof. The coagulation bath can comprise an aqueous acid or methanol. The aqueous acid can comprise aqueous sulfuric acid. The coagulation bath can further comprise sodium sulfate, boric acid or a mixture thereof. The solution of poly alpha-1,3-glucan in (b) above can be coextruded over an extruded food product into a coagulation bath to make a tube-shaped wet gel covering an extruded food product.

The present disclosure is further directed toward a poly alpha-1,3-glucan food casing made according to a process comprising: (1) (a) dissolving poly alpha-1,3-glucan in a solvent composition to provide a solution of poly alpha-1,3-glucan; (b) extruding the solution of poly alpha-1,3-glucan into a coagulation bath to make a tube-shaped wet gel; (c) washing the tube-shaped wet gel with water; (d) optionally, plasticizing the tube-shaped wet gel with a plasticizer additive; and (e) removing the water from the tube-shaped wet gel to form a poly alpha-1,3-glucan food casing, wherein the process does not use carbon disulfide and (2) optionally the solution of poly alpha-1,3-glucan in (1) (b) is coextruded over an extruded food product into a coagulation bath to make a tube-shaped wet gel covering an extruded food product.

### EXAMPLES

The present disclosure is further exemplified in the following Examples. It should be understood that these Examples, while indicating certain preferred aspects herein, are given by way of illustration only. From the above discussion and these Examples, one skilled in the art can ascertain the essential characteristics of the disclosed embodiments, and without departing from the scope thereof, can make various changes and modifications to adapt the disclosed embodiments to various uses and conditions.

### The following abbreviations were used in the Examples

"DI water" is deionized water; "MPa" is megapascal; "NaOH" is sodium hydroxide; "KOH" is potassium hydroxide; "DPw" is weight average degree of polymerization.

### GENERAL METHODS

Degree of Polymerization (DPw) was determined by size exclusion chromatography (SEC). The molecular weight of a poly alpha-1,3-glucan can be measured as number-average molecular weight (Mₙ) or as weight-average molecular weight (M_{w}). The degree of polymerization can then be expressed as DP_{w} (weight average degree of polymerization) which is obtained by dividing M_{w} of the polymer by the weight of the monomer unit, or DPₙ (number average degree of polymerization) which is obtained by dividing Mₙ of the polymer by the weight of the monomer unit. The chromatographic system used was Alliance^{™} 2695 liquid chromatograph from Waters Corporation (Milford, MA) coupled with three on-line detectors: differential refractometer 410 from Waters, multiangle light scattering photometer Heleos^{™} 8+ from Wyatt Technologies (Santa Barbara, CA) and differential capillary viscometer ViscoStar^{™} from Wyatt. The software packages used for data reduction were Empower^{™} version 3 from Waters (column calibration with broad glucan standard, DR detector only) and Astra version 6 from Wyatt (triple detection method without column calibration). Four SEC styrene-divinyl benzene columns from Shodex (Japan) were used - two linear KD-806M, KD-802 and KD-801 to improve resolution at low molecular weight region of a polymer distribution. The mobile phase was N, N'- Dimethyl Acetamide (DMAc) from J.T Baker, Phillipsburg, NJ with 0.11% LiCI (Aldrich, Milwaukee, WI). The chromatographic conditions were as follows: temperature at column and detector compartments was 50 C, temperature at sample and injector compartments was 40 C, flow rate was 0.5 ml/min, injection volume was 100 µl. The sample preparation targeted 0.5 mg/mL sample concentration in DMAc with 5% LiCl, shaking overnight at 100 C. After dissolution, polymer solution can be stored at room temperature.

Thickness of the food casing was determined using a Mitutoyo micrometer, No. 293-831.

### Preparation for Tensile Testing

Dry films were measured with a ruler and 2.5x7.6 cm strips were cut using a comfort loop rotary cutter by Fiskars, No. 195210-1001. The samples were then transported to the testing lab where room conditions were 65% relative humidity and 70 °F +/- 2 °F (21 °C +/- 1 °C). The sample weight was measured using a Mettler balance model AE240.

Wet films were measured with a ruler and 2.5x7.6 cm strips were cut using a comfort loop rotary cutter by Fiskars, No. 195210-1001. The samples were then transported to the testing lab in a water bath where room conditions were 65% relative humidity and 70 °F +/- 2 °F (21 °C +/-1 °C). The wet sample weight was measured using a Mettler balance model AE240. The sample was left to soak in the water bath until right before testing.

Tensile Properties were measured on an Instron 5500R Model 1122, using 2.5 cm grips, and a 2.5 cm gauge length, in accordance with ASTM D882-09.

### Preparation of Poly alpha-1,3-glucan

Poly alpha-1,3-glucan, using a gtfJ enzyme preparation, was prepared as described in the co-pending, commonly owned U.S. Patent Application Publication Number 2013-0244288 which was published on September 19, 2013.

### Materials and General Methods

Potassium hydroxide, sodium hydroxide and sulfuric acid were obtained from EMD Chemicals (Billerica, MA). Glycerol was obtained from Acros Chemicals. Sodium sulfate was obtained from Sigma Aldrich.

### Polymer Solution Preparation

Poly alpha-1,3-glucan polymer powder was dried in a vacuum oven at 40 °C overnight. A glucan polymer solution containing 18.5% Glucan with a DPw of 650 was prepared with a solvent that contained 10% KOH in water. These solutions are reported as if the polymer were dissolved in a 10% KOH solution, and this would be possible with enough shear. However, under laboratory conditions, to avoid clump formation, the polymer is first slurried in part of the water and the remainder is added as a more concentrated KOH solution. KOH solutions of 20% to 40% are typically mixed with the glucan powder slurry in water. These blends are hand mixed or stirred with a laboratory mixer, depending on the quantity required.

### Coagulation Fluid Preparation

Coagulation solution was prepared by dissolving 247 g of sodium sulfate in 570 g of water in a stirred 1 liter beaker on a hot plate, heating to 35 C. Once the sodium sulfate completely dissolved, 133 g of sulfuric acid was added. The solution was cooled to room temperature before using.

### Example 1

### Process for Making a Poly Alpha-1,3-Glucan Food Casing

To demonstrate that a robust seamless tube could be made from these glucan solutions, and without availability of standard equipment with an annular die to extrude such a tube, a tube of glucan was made using the following procedure.

A 18.5% solution of glucan with a DPw of 650 dissolved in a solvent composition containing 10% KOH in water was provided. (This solution based on totals was 18.5% glucan, 8.1% KOH, 73.4% water.) Ten to fifteen ml of this solution was poured onto a glass plate. A 6-inch wide doctor blade was drawn over the solution to create a 0.010 inch thick cast wet film. A glass test tube (dimensions 2 cm diameter x 20 cm long) was rolled over the cast wet film to transfer the cast wet film to the glass tube. The coated test tube was then immediately immersed in the coagulation fluid for 2 minutes to form a tube-shaped wet gel. The coated tube was them immediately placed into consecutive baths of deionized water until the water pH was neutral. The coated tube was then placed in a solution of 90% water/10% glycerol for 5 minutes. The tube-shaped wet gel was then loosened, removed from the test tube and transferred to a smaller diameter tube made from a rolled piece of polyethyelene film to dry. The final dry food casing was 25.4 +/- 13 microns thick, 12.7 cm long and had a circumference of 7.1 cm. The final dry food casing was transparent. A strip was cut from the dry food casing and breaking stress measured. The breaking stress was found to be 10 MPa with a max strain to break of 20%.

In order to estimate the strength of the tubes extruded into a coagulation bath and without availability of standard equipment to extrude such tubes, the 18.5% solution of glucan with a DPw of 650 used above was poured onto a glass plate, a doctor blade was drawn over the solution to create the 0.010 inch wet film, but instead of forming a tube, the wet film plus glass plate was immediately immersed in the coagulation fluid for 1 minute to form a flat wet gel. The flat wet gel was washed several times in fresh water baths until the pH of the water bath was neutral. The flat wet gel thickness was measured to be 76 micron. The was cut into 3 Instron samples and breaking stress was measured. The average of the 3 measurements was breaking stress of 1.9 MPa and max strain to break of 54%. This suggests that the tubes extruded into a coagulation bath would be strong enough to be pulled through a continuous process while still wet.

Thus, a poly alpha-1,3-glucan food casing was made according to the present disclosure.

### Example 2

### Process for Making a Poly Alpha-1,3-Glucan Food Casing

Sixty g poly alpha-1,3-glucan mixture composed of 42% glucan of DPw 800 and 58% water was slurried in 50 g of water. 13.2 g of KOH was dissolved in 34.3 g of water. The KOH solution was then added to the alpha-1,3-glucan slurry and mixed using a lab-scale blender until the polymer was completely dissolved to make a solution of poly alpha-1,3-glucan. The solution was centrifuged for 30 minutes to remove air bubbles. The final solution concentration was 16 wt% poly alpha-1,3-glucan, 8.4 wt% KOH and 75.6% water. The solvent composition defined as the weight of KOH divided by the weight of KOH and water was 10%. The solution was extruded through a slot die directly into a coagulation bath. The slot dimensions were 254 micron in thickness and 19 mm in width. The solution was pumped through the slot die using a syringe pump with a cylinder volume of 100 ml. The slot die was slightly submerged into a coagulation bath during operation. The coagulation solution was composed of 14 wt% sulfuric acid, 22 wt% sodium sulfate and the rest water. The coagulation bath contained roughly 2 I of coagulation bath liquid in a 50 cm long stainless steel vat. The solution was pumped through the slot die and contacted with the coagulation liquid to make a film-shaped wet gel. The pump rate was varied from 2.5 ml/min to 10 ml/min. The wet gel was continuously pulled through the coagulation bath into a water bath. The film-shaped wet gel was washed several times in fresh water baths until the pH of the water bath was neutral. The film-shaped wet gel thickness was measured to be 102 micron. The film shaped wet gel was then dipped into a 3 wt% glycerol bath and then dried under tension. The film-shaped wet gel dried to form a clear film with breaking stress of 13 MPa and max strain to break of 40%.

Thus, this example demonstrates a process to make a glucan film by extruding the film into a coagulation bath to make a film-shaped wet gel that has sufficient strength to endure tensioning during the subsequent steps. Due to equipment limitations the die shape used here was a slot die, however, use of appropriate equipment would result in a tubular casing instead of a flat film. Optionally, fluid could be injected into the interior of the extruded tube.

### Permeable, Shrinking Casings

The following examples demonstrate that poly alpha-1,3-glucan casings allow water to permeate through and be removed from food products. They also show that as the food product shrinks, the casing shrinks with it to maintain a well-formed casing around the food product.

Individual hot dogs (8.0 - 8.5 g each) were placed on a skewer and dipped into poly alpha-1,3-glucan solutions, as indicated below. Hotdogs were weighted before and after dipping and again at regular intervals to measure weight loss due to water evaporation. As shown in the Table below, the hotdogs coated with poly alpha-1,3-glucan (at thicknesses that would be considered typical) lost the same amount of moisture as the uncoated hotdogs. This high degree of permeation would allow water to escape from the meat emulsion during cooking to create the desired texture. It was observed that the coatings shrank with the hotdogs and maintained a tight seal to the hotdogs as the water evaporated from the extruded meat.

### Comparative Examples A, B and C

### Uncoated Hotdogs

Comparative Examples A, B & C were uncoated hotdogs, attached to skewers, used here for controlled comparisons. Comparative Examples A & B were left under ambient conditions, while Comparative Example C was sealed in a polyethylene bag. Weight losses after 7 days are shown in the Table.

### Example 3

### Process for Making a Poly Alpha-1,3-Glucan Food Casing Covering a Food Product

The hotdog on skewer in Example 3 was dipped in the following solution: 10% poly alpha-1,3-glucan (1000 DPw) in a 6.8% KOH/water solution. This hotdog was then immediately dipped into a coagulation solution (26 wt% Na₂SO₄/14 wt% H₂SO₄) for 2 minutes. It was then dipped into water and dried under ambient conditions. Its weight was monitored at intervals and the percent weight loss is shown in the Table below. This calculation was made assuming that the dry coating weight was 10% of the original wet coating weight. After the 7-day measurement was completed, the hotdog was sliced open and the coating was examined by microscope. The thickness had a diffuse boundary so the thickness was difficult to determine. However, considering the wet weight that was applied, the thickness was close to 63 microns. Weight losses after 7 days are shown in the Table.

### Example 4

### Process for Making a Poly Alpha-1,3-Glucan Food Casing Covering a Food Product

The hotdog on skewer in Example 4 was dipped in the following solution: 10% poly alpha-1,3-glucan (1000 DPw) in a 6.8% KOH/water solution. This hotdog was then hung to dry under ambient conditions for 1 day to allow the coating to dry before coagulation. On day 2, it was dipped into a coagulation solution (26 wt% Na₂SO₄/14 wt% H₂SO₄) for 2 minutes. It was then dipped into water and dried under ambient conditions. Its weight was monitored at intervals and the percent weight loss is shown in the Table, below. This calculation was made assuming that the dry coating weight was 10% of the original wet coating weight. After the 7-day measurement was completed, the hotdog was sliced open and the coating was examined by microscope. The thickness had a diffuse boundary so the thickness was difficult to determine. However, considering the wet weight that was applied, the thickness was close to 63 microns. Weight losses after 7 days are shown in the Table.

**Table**

| Weight Loss | | |
|---|---|---|
| Example | Sample Description | 7-Day Weight Loss |
| Comparative Example A | Control #1 - no coating | 44.8% |
| Comparative Example B | Control #2 - no coating | 45.2% |
| Comparative Example C | Control #3 - no coating, sealed in PE bag | 1.7% |
| Example 3 | Coated with glucan from caustic - coag/dry | 46.0% |
| Example 4 | Coated with glucan from caustic - dry/coag/dry | 44.9% |

Thus, the Table shows that the poly alpha-1,3-glucan casings allow water to permeate through and be removed from food products. It was observed that as the food product shrinks, the casing shrinks with it to maintain a well-formed casing around the food product.

### Example 5

### Poly Alpha-1,3-Glucan Food Casing Strength for Covering a Food Product

To demonstrate that a poly alpha-1,3-glucan layer co-extruded with an extruded food product into a coagulation bath would be strong enough to be pulled through a continuous process (including twisting and hanging while still wet), and without availability of standard equipment to co-extrude such products, flat wet gels of glucan were made using the following procedure, and mechanical properties of those flat wet-gels were tested.

A 16.5% poly alpha-1,3-glucan (800 DPw) in a 8.4% KOH/water solution was poured onto a glass plate. A doctor blade was drawn over the solution to create a wet film. The wet film plus glass plate was immediately immersed in the coagulation fluid for 1 minute to form a flat wet gel. The flat wet gel was washed several times in fresh water baths until the pH of the water bath was neutral. The flat wet gel thickness was measured to be 120 micron. This was cut into an Instron sample and breaking stress was measured. The breaking stress was measured to be 2.4 MPa and max strain to break was 70%.

Thus, a poly alpha-1,3-glucan layer co-extruded with an extruded food product into a coagulation bath would be strong enough to be pulled through a continuous process.

## Claims

1. A process for making a polysaccharide food casing comprising:
(a) dissolving polysaccharide in a solvent composition to provide a solution of polysaccharide;
(b) extruding the solution of polysaccharide into a coagulation bath to make a tube-shaped wet gel;
(c) washing the tube-shaped wet gel with water;
(d) optionally, plasticizing the tube-shaped wet gel with a plasticizer additive; and
(e) removing the water from the tube-shaped wet gel to form a polysaccharide food casing,
**characterized in that** the polysaccharide is poly alpha-1,3-glucan and the process does not use carbon disulfide.

2. The process according to claim 1, wherein the solvent composition is an aqueous base.

3. The process according to claim 2, wherein the aqueous base is selected from the group consisting of aqueous potassium hydroxide, aqueous sodium hydroxide and aqueous tetraethyl ammonium hydroxide.

4. The process according to claim 1, wherein the solvent composition further comprises a solubility additive, a plasticizer additive or a mixture thereof.

5. The process according to claim 1, wherein the coagulation bath comprises an aqueous acid or methanol.

6. The process according to claim 5, wherein the aqueous acid comprises aqueous sulfuric acid.

7. The process according to claim 5, wherein the coagulation bath further comprises sodium sulfate, boric acid or a mixture thereof.

8. The process according to claim 1, wherein the solution of poly alpha-1,3-glucan in (b) is coextruded over an extruded food product into a coagulation bath to make a tube-shaped wet gel covering an extruded food product.

9. The process according to claim 1, further comprising step (f) of encasing processed meat using the polysaccharide food casing.

10. The process according to claim 1, further comprising step (f) of encasing sausage using the polysaccharide food casing.

11. A poly alpha-1,3-glucan food casing made according to claim 1 or claim 8.

12. The food casing according to claim 11 covering a food product.

## Patentansprüche

1. Verfahren zur Herstellung einer Nahrungsmittelhülle aus Polysaccharid, umfassend:
(a) Lösen von Polysaccharid in einer Lösungsmittelzusammensetzung, um eine Lösung von Polysaccharid bereitzustellen;
(b) Extrudieren der Lösung des Polysaccharids in ein Koagulierungsbad hinein, um ein schlauchförmiges Nassgel herzustellen;
(c) Waschen des schlauchförmigen Nassgels mit Wasser;
(d) gegebenenfalls Plastifizieren des schlauchförmigen Nassgels mit einem Plastifizierungsadditiv; und
(e) Entfernen des Wassers aus dem schlauchförmigen Nassgel, um eine Nahrungsmittelhülle aus Polysaccharid zu bilden,
**dadurch gekennzeichnet, dass** das Polysaccharid Poly-alpha-1,3-glucan ist und das Verfahren keinen Schwefelkohlenstoff verwendet.

2. Verfahren nach Anspruch 1, wobei die Lösungsmittelzusammensetzung auf wässriger Basis ist.

3. Verfahren nach Anspruch 2, wobei die wässrige Basis ausgewählt ist aus der Gruppe bestehend aus wässrigem Kaliumhydroxid, wässrigem Natriumhydroxid und wässrigem Tetraethylammoniumhydroxid.

4. Verfahren nach Anspruch 1, wobei die Lösungsmittelzusammensetzung des Weiteren ein Löslichkeitsadditiv, ein Plastifizierungsadditiv oder eine Mischung davon umfasst.

5. Verfahren nach Anspruch 1, wobei das Koagulierungsbad eine wässrige Säure oder Methanol umfasst.

6. Verfahren nach Anspruch 5, wobei die wässrige Säure wässrige Schwefelsäure umfasst.

7. Verfahren nach Anspruch 5, wobei das Koagulierungsbad des Weiteren Natriumsulfat, Borsäure oder eine Mischung davon umfasst.

8. Verfahren nach Anspruch 1, wobei die Lösung des Poly-alpha-1,3-glucans in (b) über einem extrudierten Nahrungsmittelprodukt in ein Koagulierungsbad hinein coextrudiert wird, um ein schlauchförmiges Nassgel herzustellen, das ein extrudiertes Nahrungsmittelprodukt bedeckt.

9. Verfahren nach Anspruch 1, des Weiteren umfassend Schritt (f) des Umhüllens von verarbeitetem Fleisch unter Verwendung der Nahrungsmittelhülle aus Polysaccharid.

10. Verfahren nach Anspruch 1, des Weiteren umfassend Schritt (f) des Umhüllens von Würstchen unter Verwendung der Nahrungsmittelhülle aus Polysaccharid.

11. Nahrungsmittelhülle aus Poly-alpha-1,3-glucan, die nach Anspruch 1 oder Anspruch 8 hergestellt ist.

12. Nahrungsmittelhülle nach Anspruch 11, die ein Nahrungsmittelprodukt bedeckt.

## Revendications

1. Procédé de fabrication d'un boyau alimentaire à base de polysaccharide, comprenant :
(a) la solubilisation du polysaccharide dans une composition de solvant afin d'obtenir une solution de polysaccharide ;
(b) l'extrusion de la solution de polysaccharide dans un bain de coagulation afin d'obtenir un gel humide en forme de tube ;
(c) le lavage du gel humide en forme de tube avec de l'eau ;
(d) éventuellement, la plastisation du gel humide en forme de tube à l'aide d'un additif plastifiant ; et
(e) l'élimination de l'eau du gel humide en forme de tube afin de former un boyau alimentaire à base de polysaccharide,
**caractérisé en ce que** le polysaccharide est le poly alpha-1,3-glucane et que le procédé n'utilise pas de disulfure de carbone.

2. Procédé selon la revendication 1, dans lequel la composition de solvant est une base aqueuse.

3. Procédé selon la revendication 2, dans lequel la base aqueuse est choisie dans le groupe constitué par l'hydroxyde de potassium aqueux, l'hydroxyde de sodium aqueux et l'hydroxyde de tétraéthylammonium aqueux.

4. Procédé selon la revendication 1, dans lequel la composition de solvant comprend outre un additif de solubilité, un additif plastifiant ou un mélange de ceux-ci .

5. Procédé selon la revendication 1, dans lequel le bain de coagulation comprend un acide aqueux ou du méthanol.

6. Procédé selon la revendication 5, dans lequel l'acide aqueux comprend de l'acide sulfurique aqueux.

7. Procédé selon la revendication 5, dans lequel le bain de coagulation comprend en outre du sulfate de sodium, de l'acide borique ou un mélange de ceux-ci.

8. Procédé selon la revendication 1, dans lequel la solution de poly alpha-1,3-glucane dans l'étape (b) est coextrudée sur un produit alimentaire extrudé dans un bain de coagulation afin de préparer un gel humide en forme de tube recouvrant un produit alimentaire extrudé.

9. Procédé selon la revendication 1, comprenant en outre l'étape (f) d'embossage de viande transformée en utilisant le boyau alimentaire à base de polysaccharide.

10. Procédé selon la revendication 1, comprenant en outre l'étape (f) d'embossage de saucisse en utilisant le boyau alimentaire à base de polysaccharide.

11. Boyau alimentaire à base de poly alpha-1,3-glucane, préparé selon la revendication 1 ou la revendication 8.

12. Boyau alimentaire selon la revendication 11, recouvrant un produit alimentaire.
